(19) Europäisches Patentamt
European Patent Office
Office européen des brevets

(11) EP 2 975 087 B1

(12) **EUROPEAN PATENT SPECIFICATION**

(45) Date of publication and mention of the grant of the patent:
**04.03.2020 Bulletin 2020/10**

(21) Application number: **14715032.0**

(22) Date of filing: **13.03.2014**

(51) Int Cl.:
*C08L 91/00* (2006.01) *C08L 45/02* (2006.01)
*C08L 57/02* (2006.01) *C08L 93/04* (2006.01)
*C08L 101/00* (2006.01) *E01C 7/08* (2006.01)
*E01C 7/30* (2006.01) *C08L 91/06* (2006.01)

(86) International application number:
**PCT/ES2014/070182**

(87) International publication number:
**WO 2014/140401 (18.09.2014 Gazette 2014/38)**

(54) **SYNTHETIC BINDER COMPOSITION IN THE FORM OF A PELLET FOR APPLICATIONS IN PAVINGS**

SYNTHETISCHE BINDERZUSAMMENSETZUNG IN FORM EINES PELLETS FÜR ANWENDUNGEN BEI PFLASTERUNGEN

COMPOSITION DE LIANT SYNTHÉTIQUE SOUS FORME DE GRANULÉ DESTINÉ À DES APPLICATIONS DE REVÊTEMENTS DE CHAUSSÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2013 PCT/ES2013/070169**

(43) Date of publication of application:
**20.01.2016 Bulletin 2016/03**

(73) Proprietor: **Repsol, S.A.**
**28045 Madrid (ES)**

(72) Inventors:
- **MORENO MARTÍNEZ, Emilio**
  **E-28935 Móstoles (Madrid) (ES)**
- **LUCAS OCHOA, Francisco**
  **E-28045 Madrid (ES)**
- **BARDESI ORÚE ECHEVARRÍA, Alberto**
  **E-28045 Madrid (ES)**

(74) Representative: **ABG Intellectual Property Law, S.L.**
**Avenida de Burgos, 16D**
**Edificio Euromor**
**28036 Madrid (ES)**

(56) References cited:
**EP-A1- 0 179 510** **WO-A1-2009/153324**
**FR-A1- 2 765 229** **GB-A- 1 163 343**

- **Glenda Vanessa Webber: "Wax Characterisation by Instrumental Analysis", Thesis, 1 December 2000 (2000-12-01), pages 1-132, XP055523827, University of Stellenbosch, Stellenbosch, South Africa Retrieved from the Internet: URL:https://core.ac.uk/download/pdf/37374038.pdf [retrieved on 2018-11-14]**
- **JOHN R. CARROLL ET AL: "Using Waxes and Polymers To Improve Coatings Properties", MODERN PAINT AND COATINGS, 1 October 1993 (1993-10-01), pages 1-4, XP055523963,**
- **John Shaw: "TWG -Warm Mix Asphalt (Sasol wax, Sasobit)", Technical Workgroup Meeting (TWG) on Warm Mix Asphalt, 12 December 2007 (2007-12-12), pages 1-38, XP055523947, Hunt Valley, MD Retrieved from the Internet: URL:http://www.warmmixasphalt.org/submissions/53_20080101_John%20Shaw%20-%20Sasobit. pdf [retrieved on 2018-11-14]**
- **Anonymous: "Fischer-Tropsch Hard Waxes (Product brochure)", , 1 November 2017 (2017-11-01), pages 1-5, XP055523707, Retrieved from the Internet: URL:http://www.sasolwax.com/fileadmin/sasolwax/documents/Sasol_Fischer-Tropsch_Waxes_2018.pdf [retrieved on 2018-11-14]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 975 087 B1

- **Anonymous: "MICROCRYSTALLINE WAXES; Technical data sheet: Repsol 139-F, 145, 74", , 3 December 2017 (2017-12-03), pages 1-1, XP055524012, Retrieved from the Internet: URL:https://www.repsol.com/imagenes/global/en/microcrystaline_waxes_tcm14-19301.pdf [retrieved on 2018-11-15]**
- **Anonymous: "MACROCRYSTALLINE WAXES, Technical data sheet: Repsol 115, 137, 150, 234, 395V, 450, RS, 5860, 7030", , 1 December 2017 (2017-12-01), pages 1-1, XP055524011, Retrieved from the Internet: URL:https://www.repsol.com/imagenes/global/en/macrocrystaline_waxes_tcm14-19196.pdf [retrieved on 2018-11-15]**

## Description

### FIELD OF THE INVENTION

The invention relates to a synthetic binder composition in pellet and an asphalt mixture that are suitably used to prepare pavements. The invention further relates to the processes for preparing the compositions.

### BACKGROUND

Pavements are routinely constructed from asphalt mixture, which is a composite of binder and aggregate. Although the binder is typically the minority component in paving materials, most of the pavement properties that relate to its longevity and stability depend on the properties of the binder.

For most pavements, the binder is bitumen, a viscous liquid or a solid consisting essentially of hydrocarbons and their derivatives. However, in recent years synthetic binders have been widely used. This is because these materials can be tailored to obtain improved rheological and mechanical properties, as compared with the traditional bituminous binders typically used in road applications. In addition, the synthetic binders are typically clear, so they are readily pigmented and can be used to obtain coloured asphalt mixtures.

Synthetic binders are typically manufactured by mixing resins, oils and polymers. The resin normally provides adhesiveness and consistency properties, the oil acts as dispersant, and the polymer can impart elasticity and resistance properties to the binder composition. EP1783174 (Latexfalt B.V.), EP179510 (Shell Int. B.V.) and WO2009/025947 (Semmaterials L.P.) describe synthetic binders comprising a resin, an oil and, optionally, a polymer. The resin is a petroleum resin such as coumarone-indene resin. The oil is preferably a naphthenic oil or a mineral lubricating oil, and the polymer may be a synthetic polymer such as styrene-butadiene-styrene (SBS).

Binders, both synthetic and bituminous, are typically transported in the heated state to ensure that they are sufficiently fluid for use. However, this is costly in terms of energy, requires strict safety procedures and it can also give rise to serious environmental problems. Also, if the binder is stored at elevated temperature for an extended time period this can lead to changes in the properties of the binder, so storage time has to be limited to avoid degradation in binder properties.

Therefore, it is desirable to transport and store the binder at ambient temperature since paving takes place at sites that are generally far away from the locations where the binder is available. Consequently, transporting binder materials preferably in solid form and smaller-sizes, such as pellets, facilitates the delivery of paving binders even when they are transported to sites that are far away from the material sources.

However, due the composition of synthetic binders used for pavement or road construction, the pellets tend to be extremely sticky and thus agglomerating to one another, particularly when stored at ambient temperature for extended time periods. Efforts have been made to produce binder pellets that are not subject to agglomeration. The most extended way of solving this problem consists in the use of anti-sticking film surrounding the pellet, made normally with polymers or paraffin waxes.

US 2008/0015288 (Eiffage T.P.) describes an extrusion process for preparing coated bitumen pellets, comprising bitumen and a polymer. The purpose of the coating is to prevent the pellets from adhering or sticking to one another by adding the anti-sticking agent (polymer) directly to the extruder or the anti-sticking agent may be applied to the surface of the extrudate. However, a high proportion of polymer in the pellets is needed to prevent deformation of the product, and this may detrimentally alter the properties of the bitumen and/or may increase the final cost of the pellets.

US 7,767,259 (NiTech Coorp.) describes a process of manufacturing a hot asphaltic mix using a composition that includes pellets of a tacky deformable material at ambient pressure comprising a PE resin or a SBS or SBR copolymer. The pellet is further dispersed within a fine material such as mineral fines. The pellets may be further coated with a wax, which provides to the pellet a non-tacking outer surface for preventing from sticking together during storage and increases the flowability of the pellets within the filler. It has been proved difficult to practice this method on an industrial scale.

WO 2009/153324 (Shell Int. B.V.) describes a process wherein coated binder pellets are prepared by using a co-extrusion device and the resulting pellet having a central core and an outer layer of coating material. The central core comprises a vegetable or mineral oil, a vegetable or petroleum resin, a polymer and a mineral filler material. The coating material is a polyolefin such as polyethylene or polystyrene. However, this coated binder pellets have been proved to keep sticking to each other when stored for long period at ambient or relatively high temperatures. In addition, the use of anti-sticking film surrounding the pellet makes the manufacturing process more complicated since co-extrusion devices are normally needed.

FR 2765229 to Mobile Oil Francaise discloses a typical binder composition comprising an oil, a resin and a polymer. Additionally, the composition comprises waxes resulting from the reaction of a carboxylic acid or mixtures thereof with a diamine.

The present inventors have sought to provide a pellet composition comprising a synthetic binder composition

that can be transported at ambient temperature and are not subject to agglomeration when stored for extended time periods without the need of an anti-sticking film.

## BRIEF DESCRIPTION OF THE INVENTION

Previously, the attempts of developing synthetic binder pellets which can be stored and transported at ambient temperature have been performed by using an anti-sticking film (normally a polymer or a paraffin wax) but without complete success. These products containing the anti-sticking film tend to finally agglomerate and melt when storage or transported for extended time periods.

The authors of the present invention have found that by including a Fischer-Tropsch wax with melting point between 80 and 120 °C in a synthetic binder composition comprising at least one resin, at least one oil and at least one polymer, improves the non-sticky, non-aggregating, and non-flow properties of the resulting pellet product, without the need of an anti-sticking film.

Thus, the pellet composition comprising the synthetic binder composition of the invention can be transported at ambient temperatures as pellets and are not subject to agglomeration when transported or stored for extended periods.

In addition, the absence of this film, which is typically needed in high proportions, avoids the possible detrimental alteration of the final properties of the binder and decreases the cost of the final product.

Therefore, a first aspect of the invention is the provision of a pellet composition comprising a synthetic binder composition comprising from 10 to 65%wt based upon the total weight of the binder composition of at least one resin, from 20 to 60wt% based upon the total weight of the binder composition of at least one oil, from 5 to 35wt% based upon the total weight of the binder composition of at least one polymer, and from 5 to 20wt% based upon the total weight of the binder composition of at least one Fischer-Tropsch wax with melting point between 80 and 120 °C which forms a crystalline network at temperatures below 110°C, and at least one filler material.

In a particular embodiment, the synthetic binder composition disclosed herein further comprises sulfur.

Another aspect describes a pellet composition comprising the synthetic binder composition disclosed herein, and at least one filler material.

An additional aspect of the invention relates to an asphalt mixture comprising the pellet composition of the invention.

A process for the preparation of the synthetic binder composition is disclosed herein, comprising mixing the corresponding components of the synthetic binder at a temperature from 100 to 160°C.

In a further aspect, the present invention provides a process for the preparation of the pellet composition of the invention, comprising mixing the synthetic binder composition as defined above, and a filler material at a temperature from 100 to 160°C.

An advantage conferred to the process for the preparation of the pellet composition of the invention by the incorporation of the Fischer-Tropsch wax integrated within the binder composition, and not as an anti-sticking film, it is the provision of a simpler and more economical process of preparing synthetic binder pellets, without the need of any special device or process, such as a co-extruder.

Another aspect disclosed relates to a process for the preparation of said asphalt mixture, which comprises mixing the pellet composition with an aggregate.

A final aspect of the invention relates to the use of said asphalt mixture to form pavement.

## BRIEF DESCRIPTION OF THE DRAWINGS

Figure 1 are pellets of composition I (according to the invention), composition IV (comparative with paraffinic wax) and composition V (comparative with micro-paraffinc wax) before being subject to the compression experiment of example 3.

Figures 2a and 2b are pictures of the pellets of composition I according to the invention after being subject to the compression experiment of example 3. It can be appreciated that the pellets maintain their integrity and do not stick.

Figures 3a and 3b are pictures of the "pellets" of composition IV (comparative with paraffinic wax) after being subject to the compression experiment of example 3. It can be appreciated that the pellets have stick together to the point where they cannot be considered pellets any longer.

Figures 4a and 4b are pictures of the "pellets" of composition V (comparative with micro-paraffinc wax) after being subject to the compression experiment of example 3. It can be appreciated that the pellets have stick together to

the point where they cannot be considered pellets any longer.

Figure 5 is a picture of "pellets" of composition III (comparative without wax) after being subject to the compression experiment of example 3. It can be appreciated that the pellets have stick together to the point where they cannot be considered pellets any longer.

## DETAILED DESCRIPTION OF THE INVENTION

The term "molecular weight" in the context of the present invention is defined by:

$$M_W = \frac{\sum N_i M_i^2}{\sum N_i M_i}$$

wherein Mi is the molecular weight of a chain and Ni is the number of chains of that molecular weight. Mw takes into account the molecular weight of a chain in determining contributions to the molecular weight average. The more massive the chain, the more the chain contributes to Mw. Mw is determined by methods that are sensitive to the molecular size, such as light scattering techniques.

The main objective of the present invention is providing a synthetic binder composition which can be transported at ambient temperature as pellets and are not subjected to agglomeration when transported or stored for extended time periods.

In the context of the present invention, the term "synthetic binder", also known as "clear binder" or "pigmentable binder", refers to a synthetic blend of constituents of petrochemical origin with absence of black bitumen, resulting in a much more intense colorization even with a reduced amount of bitumen.

Likewise, the term "pellet" as used in the present invention encompasses a wide variety of discrete solid entities. The shape of the pellets can be varied and still retain their properties. Examples of suitable pellet shapes include those substantially similar to rods, sheets, spheroids, prills, pastilles, chips, cubes, tablets, slates, chunks, irregularly-shaped pellets, flakes, granulates, and the like.

Therefore, the objective of the present invention is met by means of a pellet composition comprising a synthetic binder composition comprising from 10 to 65%wt based upon the total weight of the binder composition of at least one resin, from 20 to 60wt% based upon the total weight of the binder composition of at least one oil, from 5 to 35wt% based upon the total weight of the binder composition of at least one polymer, and from 5 to 20wt% based upon the total weight of the binder composition of at least one Fischer-Tropsch wax with a melting point between 80 and 120 °C which forms a crystalline network at temperatures below 110°C.

In the context of the present invention, the term "resin" refers to a petroleum or vegetable resin. The term "petroleum resin" refers to those resins manufactured by condensation of unsaturated hydrocarbons that are present in fractions produced in thermal cracking processes and pyrolysis reactions of hydrocarbon fractions to obtain a C5 aliphatic resins, C9 aromatic resins or C5/C9 Aliphatic/Aromatic Resins with molecular weight higher than 1000, preferably between 1000 and 5000 and are solid at ambient temperature.

The term "C5 aliphatic resins" refers to polymers, preferably branched, of monomers with five carbon atoms. A non-limiting example is the "C5 Piperylene Hydrocarbon Resin Oil", a resin produced with the feedstock "C5 Piperylene". C5 Piperylene is obtained via cracking of naphtha and distillation and has components such as trans-1,3-pentadiene, cis-1,3-pentadiene, 2-methyl-2-butene, dicyclopentadiene, cyclopentadiene and cyclopentene. The liquid C5 Piperylene feedstock can be polymerized to a hard resin using a Lewis acid catalyst. Some examples of possible monomers forming C5 Piperylene Hydrocarbon Resin Oil are E- or Z-pentadiene, 2-methylpropylene, 2-methyl-2-pentene, 1-butene, 2-butene or cyclopentene. Thus, the resulting polymer is branched having different "arms", forming a structure such the non-limiting exemplary fragment of formula I:

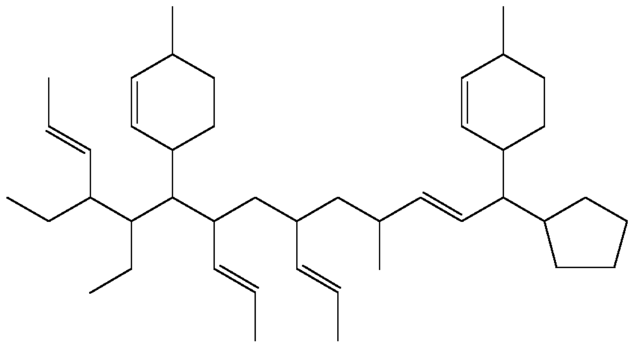

**Formula I**

The term "C9 aromatic resins" refers to polymers, preferably branched, of monomers with nine carbon atoms. A non-limiting example is the "C9 Resin Oil". C9 Resin Oil is obtained via cracking of naphtha and distillation and has components such as vinyltoluenes, dicyclopentadiene, indene, methylstyrene, styrene and methylindenes. Thus, the resulting polymer is branched having different "arms", forming a structure such the non-limiting exemplary fragment of formula II:

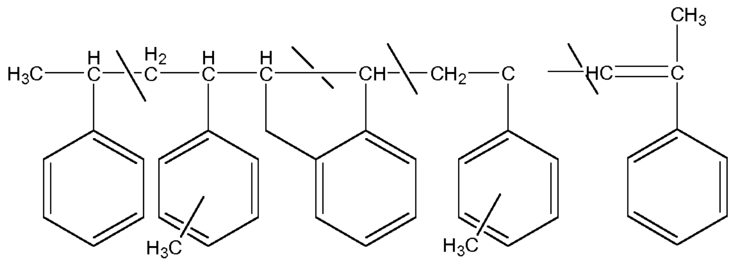

**Formula II**

The term "C5/C9 Aliphatic/Aromatic Resins" refers to C5 aliphatic and C9 aromatic resins modified by mixing to produce hybrid polymers. These resins are mostly C9-based co-polymerized with C5 aliphatic monomers.

The term "vegetable resin" refers to those resins obtained as a hydrocarbon secretion of a plant.

In a particular embodiment of the invention, the resin is selected from the group of petroleum resins, vegetable resins, and mixtures thereof.

Therefore, in a particular embodiment of the invention, the resin is selected from the group of petroleum aromatic resins, petroleum aliphatic resins, rosins, and mixtures thereof.

Preferably the petroleum resin is a petroleum aromatic resin. More preferably the petroleum resin is a petroleum aromatic resin selected from C5-C9 petroleum resins, even more preferably is a C9 petroleum resin. Even more preferably selected from the group which comprises CAS Number 64742-16-1.

Examples of suitable petroleum resins are Nosbur® C9 BT-120, BT-120 CYJSA Petroleum, resins; Resins, petroleum; 18X0103; 700E; 700E (petroleum resin); A 1115; AP 1085; AP 1100NT; Aralken; Arien; Arkon 115; Arkon E 90; Arkon P 128; Arkon P 135; Arkon P 141; Arkon P 145; Arsolen; Asmol; Bararesin; Bitkor R; C 140; C 9120; CA 1; Carbomul R; Copar 100; D 100; DR 903; E 1102; ECR 231C; ECR 2520; ECR 368LC; ECR 806; ES 5000F; Eastotac 130; Eastotac II 142R; Ecofalt EW; Elepcoat LSS 520; Escorez 100; Escorez 1000; Escorez 110-3U; Escorez 1305; Escorez 1311; Escorez 2000; Escorez 2101; Escorez 2203; Escorez 228F; Escorez 231C; Escorez 2520; Escorez 3102; Escorez 355; Escorez 5020; Escorez 5637; Escorez 9191; Escorez 9241; Escorez 9251; Escorez ECR 231C; Escorez ECR 356B; Escorez Resin 110-3U; Eskorets; FR 100; FR 100 (petroleum resin); FR 40; FR 40 (petroleum resin); FR 80; FR 80 (petroleum resin); FTR 1600; FTR 6070; FTR 6110; FTR 6115; FTR 6125; FTR 7125; FTR 8120; G 500; G 500 (petroleum resin); G 870; G 928; HRD 5000; HRT 100X; Hercurez A 100; Hi-rez; Hi-rez 100G; Hi-rez 1515T; Hi-rez C 100X; Hi-rez C 110X; Hi-rez H 180X; Hi-rez P 100LM; Hi-rez QPA; Hi-rez T 480X; Hi-rez T 480X75; Hikitack P 120H; Hikotack P 140; Hiresin; Hiresin (petroleum resin); Hiresin 120; Hiresin 120S; Hiresin 140; Hiresin 150; Hiresin 60; Hiresin 75; Hiresin 90; Hiresin 90S; Hiresin AX; Hiresin LR; Hiresin QP; Hiresin RS 21; Hiresin RS 9; Hydrocarbons, petroleum resins; Inkovar 1150; Isotac 100R; Isotac 105A; Isotac SB 100A; JWS 8947; K 50; KE 756B; KE 756E; KZ 838; Kurariten 21; Kurariten DC; L 90; LP 180 (petroleum resin); LW 302E; LX 1065; Litkor NN; M 50; M 50 (petroleum resin); MAT-ESR 50; MOC 125L; MP 200; MP 200 (petroleum resin); Marukarez; Marukarez 1070P; Marukarez 300IP; Marukarez H 700F; Marukarez H 700G; Marukarez M 510A; Marukarez M 890; Marukarez R 100A; Marukarez R 100AS;

Marukarez R 100B; Marukarez S 100A; Marukarez S 110A; Marukarez S 115A; Marukarez S 119; Marukarez S 85A; Marukarez S 95A; Marukarez T 100AS; Marukarez T 200A; Marukarez U 90A; Mexphalte C-P 2; N 120; N 120 (petroleum resin); N 180; NE-HP; NK 1; NK 1 (resin); NP-HCS; NR 560; Necires EPX-L; Neopolymer; Neopolymer 150S; Neopolymer 170; Neopolymer 180; Neopolymer 90; Neopolymer C 140; Neopolymer DP 90; Neopolymer K 2; Neopolymer L; Neopolymer L 120; Neopolymer L 90; Neopolymer NP 150; Neopolymer P 120; Nevchem 140in; Nevchem 150; Nevchem 70; Neville 1850; Nevoxy G 10; Nevoxy G 2; Nevoxy G 4; Nevoxy G 6; Nevoxy G 8; Nevroz 1520; Nisseki 120; Nisseki Neopolymer L 90; Nisseki Neopolymer NP 130; Nisseki Neoresin 540; Nisseki Neoresin EP 80; Novares TK 90; OKPP 7; Oligotech 1030; Oligotech 1040; Oppera PR 100A; P 120; P 120 (petroleum resin); P 120h; PR 120; PX 95; Petcoal 120T; Petcoal 140MH3; Petcoal 140SE; Petcoal F 110; Petcoal LX; Petcoal LX-HS; Petroleum products, resins; Petrosin; Petrosin (petroleum resin); Petrosin 150; Petrosin K; Petrosin PR 120; Petrotack 1140; Petrotack 140HM; Petrotack 60; Piccodiene 2025; Piccopale; Piccopale 100; Piccopale 100BHT; Piccopale 100SF; Piccopale 200HM; Piccopale 70; Piccopale 70SF; Piccotac A; Pioneer 442; Pirolen 100; Pirolen 120A; Plastics, petroleum resins; Polarez PX 95; Polyvel G; Polyvel GP 65; Polyvel M; Pyroplast; Pyroplast (petroleum resin); Pyroplast 2U; Pyroplast 5; Pyroplast 59; Pyroplast 7; QE 5503; QME 100; QME 120; QME 125PS; QME 60; QNT 1345; Quintol; Quintone 1325; Quintone 1345; Quintone 190P; Quintone C 200E; Quintone C 200L; Quintone C 200S; Quintone D 100; Quintone DX 390N; Quintone E 200SN; Quintone G 100; Quintone G 100B; Quintone K 100; Quintone LW 302E; Quintone M 100; Quintone N 180; Quintone N 190; Quintone P 195N; Quintone P 500; Quintone RX 05; Quintone S 100; Quintone U 185; R 1100S; R 2612; R 5364; RL 120; RS 21; Res-A 2514; Rikarez 1126; S 115A; SC 100; SK 1000; SK 1000 (petroleum resin); SK 120; SP 1068; SP 1068 (petroleum resin); SPI; SPL; SPL (petroleum resin); SPP; SPP (coating); SPP 44; SPP 51; SPP 59; SPP 75; Sacocell 309; Selosol A 43C; Selosol D 355; Selosol G 870; Sheberez 68160B; Spolak; Sta-Tac B; Syntaron 750; SzF 2/3; SzF 8/9; T 200A; TA 39-099E; TA 39-104A; TFE 22; TRE 100; Tacolyn 1085; Toho Hiresin 120; Toho Hiresin 140.

In another particular embodiment, the vegetable resin is selected from rosins.

An example of a suitable vegetable resin is rosin ester.

The pellet composition comprising a synthetic binder composition comprising one resin, contains from 10 to 65wt% resin, more preferably from 15 to 50wt%, more preferably from 20 to 40wt%, and even more preferably about 25wt%, based upon the total weight of the synthetic binder composition.

In the context of the present invention, the term "oil" refers to any neutral, nonpolar chemical substance, which is a viscous liquid at ambient temperatures with solidification point lower than 30°C, and is immiscible with water but soluble in alcohols or ethers, exclusively obtained from distillation and extraction crude oil process, not by chemical reaction. Depending on the base oil, oils can be classified as naphthenic oils, paraffinic oils or aromatic oils. The term "naphthenic oil" refers to oils derived from naphthenic crude. The term "paraffinic oil" refers to those oils prepared by solvent separation techniques from paraffinic crude oil, which have good thermal and oxidative stability and good high-temperature viscosity characteristics. The term "aromatic oil" refers to those oils derived from the extraction of aromatics in paraffinic oil production.

In a particular embodiment of the invention, the oil is selected from naphthenic oils, paraffinic oils and aromatic oils, and mixtures thereof.

Examples of suitable oils includes Nytex® 801, 810, 820, 840 and 8450 from Nynas as naphthenic oils; Extensoil® 24, 29, 200, 230, 260, 265 and 270 from Respsol as paraffinic oils; and Repex E-7® and Extensoil® 14 from Repsol as aromatic oils; and mixtures thereof.

The pellet composition comprising synthetic binder composition comprising an oil, contains from 20 to 60wt% oil, more preferably from 25 to 50wt%, more preferably from 30 to 40wt%, even more preferably about 40wt%, based upon the total weight of the synthetic binder composition.

In the context of the present invention, the term "polymer" refers to a chemical compound or mixture of compounds consisting of repeating structural units created only through a process of polymerization with a molecular weight higher than 6.000 which is solid at ambient temperature. Polymers that contain only a single type of repeat unit are known as homopolymers, while polymers containing a mixture of repeat units are known as heteropolymers or copolymers.

In a particular embodiment of the invention, the polymer is a copolymer and mixtures thereof.

In another particular embodiment of the invention, the polymer is a copolymer selected from the group of styrene-butadiene-styrene (SBS), styrene-butadiene (SBR), ethylene vinyl acetate (EVA), ethylene butyl acrylate (EBA), styrene-ethylene-butylene-styrene (SEBS), styrene-isoprene-styrene (SIS), ethylene methacrylate (EMA) and mixtures thereof. More preferably, the polymer is selected from EVA and a mixture of EVA and SBR, or a mixture of EVA and SBS.

The pellet composition comprising a synthetic binder composition comprising a polymer contains from 5 to 35wt% polymer, more preferably from 10 to 30wt%, even more preferably 25wt%, based upon the total weight of the synthetic binder composition.

In the context of the invention, the term "Fischer-Tropsch wax" ("FT wax") refers to a synthetic wax produced by Fischer-Tropsch process. Fischer-Tropsch is a method for the synthesis of hydrocarbons and other aliphatic compounds from synthesis gas, a mixture of hydrogen and carbon monoxide in the presence of a catalyst. FT waxes are

solid at room temperature and have a fine microcrystalline internal structure characterized by long molecular chain, preferably linear (i.e. polymethylene hydrocarbon produced from natural gas using the FT process), of lengths up to 120 carbon atoms, usually between 45 and 100 carbon atoms. These lengths are higher than those of paraffin waxes such as polyethylene waxes, which contain between 20 and 40 carbon atoms. FT waxes have relatively low molecular weights, for example, of less than 2.000 Dalton, more preferably between 600 and 1500 Dalton. ("The Fischer-Tropsch synthesis: A mechanistic study using transient isotopic tracing" by van Dijk, H.A.J. Technische Universiteit Eindhoven, 2001. ISBN 90-386-2732-7)

In a particular embodiment of the invention, the Fischer-Tropsch wax is selected from FT waxes with melting point between 80 and 120°C, and mixtures thereof, more preferably between 90 and 110°C, and mixtures thereof. Even more preferably, the FT wax is selected from a FT wax with melting point of about 110°C.

An example of a suitable FT wax is Sasobit® wax.

Without being bound by any particular theory, it is believed that FT wax acts as a flux at high temperature due to their morphology, forming a crystalline network at temperatures below 110°C and thus increasing the viscosity and consistency of the binder. Consequently, the stiffness of the binder is increased while maintaining certain flexibility that avoids cracking. Additionally, the authors of the present invention have surprisingly found that this increment of stiffness results in a decrease of stickiness of the binder without the need of an anti-sticking film.

Therefore, the pellet composition comprising a synthetic binder composition contains at least one Fischer-Tropsch wax with melting point between 80 and 120 °C, which forms a crystalline network at temperatures below 110°C.

The synthetic binder composition contains from 5 to 20wt%, more preferably from 5 to 10wt% of FT wax, even more preferably about 10wt%, based upon the total weight of the synthetic binder composition.

In another embodiment of the invention, the pellet composition comprising a synthetic binder composition as defined above can further comprise sulfur.

Due to the addition of the sulfur to the pellet composition comprising a synthetic binder composition, the rheological properties of the resulting pellet product are further improved due to a polymer cross-linking effect. It is believed that a crosslinking is created within the product. Increasing sulfur levels leads to increasing cross-linking density in the binder, and consequently the rheological properties of the binder are improved.

Preferably, the sulfur is elemental sulfur, which can be commercial grade, crystalline or amorphous. Sources that provide sulfur suitable for the synthetic binder composition of the invention include primary sulfur sources and recovered sulfur sources. Preferably, the sulfur is in the form of prills.

The pellet composition comprising a synthetic binder composition may comprise sulfur, in an amount from 0.01 to 2wt%, more preferably from 0.05 to 1wt%, more preferably from 0.1 to 0.5wt%, even more preferably about 0.2wt%, based upon the total weight of the synthetic binder composition.

It will be now described the more suitable combinations and rates of components.

For the oils and resins components the more suitable combinations and corresponding rates are aromatic oil with aromatic resin or vegetable resin on a rate range 1:2 to 2:1; paraffinic oil with aliphatic resin or vegetable resin on a rate from 1:2 to 2:1; and naphthenic oil with aromatic, aliphatic or vegetable resin on a rate from 1:2 to 2:1.

For the above described oil-resins mixtures the more suitable combinations and corresponding rates with the polymers components are aromatic oil with aromatic or vegetable resins and polymers such as SBS, SBR, SIS, SEBS, EVA or EBA on a rate from 2:1 to 7:1; paraffinic oil with aliphatic or vegetable resins and polymers such as EVA, EMA or EBA on a rate from 2:1 to 7:1; and naphthenic oil with aromatic, aliphatic or vegetable resins and polymers such as SBS, SBR, SIS, SEBS, EVA, EMA or EBA on a rate from 2:1 to 7:1.

For the above describe oil-resins-polymer mixtures, the more suitable rates with the Fischer-Tropsch wax component are from 4:1 to 10:1.

For the above described oil-resins-polymer mixtures the more suitable combinations and rates with sulphur components are aromatic oil with aromatic or vegetable resins and polymers such as SBS, SBR, SIS with sulphur on a rate from 0.1 to 2.0% respectively; and naphthenic oil with aromatic, aliphatic or vegetable resins and polymers such as SBS, SBR, SIS with sulphur on a rate from 0.1 to 2.0% respectively.

In one embodiment, the invention relates to a pellet composition comprising the synthetic binder composition as defined above, and at least one filler material.

In the context of the invention, the term "filler" encompasses any mineral material.

In a particular embodiment of the invention, the filler material has a particle size less than 125 μm, more preferably less than 70 μm. Examples of suitable filler materials are calcium carbonate, limestone, silica, kaolin, hydrated alumina, dolomite, talc, and mixtures thereof.

The filler facilitates the formation of the resulting mixture into pellets. The filler, when added to the synthetic binder, provides for increased toughness of the resulting mixture, as well as further improving the non-sticky, non-aggregating and non-flow properties, by acting as a rheology modifier.

The synthetic binder may comprise from 1 to 15wt% filler, more preferably 10wt%, based upon the total weight of the synthetic binder composition.

The resulting pellets are suitable for storage and transportation at a wide range of ambient temperatures because of their non-sticky and non-flow properties. The pellets can be stored at the production site or at a remote site and can be transported and stored in piles or within containers such as sacks, tanks, and barrels. The resulting pellets are storage-stable so as to not agglomerate with adjacent pellets. For example, an individual pellet does not substantially degrade or agglomerate with adjacent pellets for a duration longer than about 24 hours, more preferably longer than about 7 days, and most preferably longer than about 12 months.

As such, when pellets are stored at normal or natural ambient conditions and humidity, the individual pellets retain their form.

In one embodiment, the invention relates to an asphalt mixture comprising the pellet composition comprising the synthetic binder composition as defined above. However, the asphalt mixture disclosed can also comprise the synthetic binder composition as defined above.

In the context of the present invention, the term "asphalt mixture" refers to a mixture of binder and aggregate. Likewise, the term "aggregate" typically encompasses any hard, inert, mineral material that is used for mixing in graduated fragments. The aggregate component may include lime, quicklime, sand, gravel, crushed stone, recycled concrete, slag, and the like.

The asphalt mixture can include the aggregate in an amount at least about 90wt% of the total asphalt mixture weight.

In a preferred embodiment, the asphalt mixture can further contain pigments. These pigments are used singly, or in combination of two or more of them.

In the context of the present invention, the term "pigment" refers to inorganic compounds which change the final colour of the asphalt mixture. Suitable inorganic pigments are known to the skilled person and examples include materials chosen from metal oxides, metal halides or metal sulphates wherein the metal is zinc, iron, copper, cobalt, lead, cadmium, titanium or vanadium.

The asphalt mixture can include the pigment in an amount from 0 to 4wt%, preferably from 1 to 2wt% of the total asphalt mixture weight.

In another embodiment, the invention relates to a process for the preparation of the pellet composition comprising a synthetic binder composition as defined above, comprising mixing the components, i.e. at least one oil, at least one Fischer-Tropsch wax, at least one resin, at least one polymer and optionally the sulfur, at a temperature from 100 to 160°C, more preferably from 120 to 160°C, even more preferably at 160°C.

The process for the preparation of the pellet composition comprising a synthetic binder composition as defined above, can be carried out in a temperature isolated mixing tank, to assure the temperature homogeneity, with heat supply and equipped with a stirrer with sufficient capacity to produce shear, for example a high speed propeller stirrer or a mill. The addition of the compounds can be reached by pumping or incorporating the solids through a manhole on the top of the tank. The dosage must be controlled in order to ensure reproducibility of the formulation and the process. First of all, the oil must be heated in order to allow the mix process properly. The temperature should be between 100 and 160°C. The second compound to add is the Fischer-Tropsch wax. After each compound addition, connects agitation to disperse perfectly the product. The third compound to be added must be the resin. The fourth the polymer, taking special care about the total dispersion without making lumps. When the polymer dispersion is finished, sulfur is optionally added.

In another embodiment, the invention relates to a process for the preparation of a pellet composition of the invention, comprising the addition of a filler material to the synthetic binder composition prepared as defined above at a temperature from 120 to 160°C, more preferably from 140 to 160°C. Special attention must be taken to the temperature decrease and the increasing of the viscosity of the product to avoid lumps and flow problems.

The resulting mixture is then discharged into an extruder device. The extruder device injects discontinuously the product through a special orifice creating drops. The drops fall onto a cooled rolling metal surface, solidifying each drop in the pellet final product. At the end of the rolling metal surface a top plate remove each pellet falling into a sack.

In a preferred embodiment, the hot pellet exiting the extruder is further mixed with a mineral coating which avoids the agglomeration until the pellets cool down and are saved into sacks for its storage. Examples of suitable mineral coatings are the same materials used as a fillers, e.g. calcium carbonate, limestone, silica, kaolin, hydrated alumina, dolomite and talc.

This mineral coating is not critical and is added in order to prevent some sticking while the product is hot. No large amounts are required of this coating and many times it has disappear by the time the preparation process has finished and before storage.

The synthetic binder may comprise up to 1wt% mineral coating, based upon the total weight of the synthetic binder composition.

In order to achieve the desirable properties, the resulting pellets have particular dimensions. Examples of suitable dimensions are for pellets in the form of pastilles about 9 mm diameter and 3 mm width, and for pellets in the form of tablets 20 $\times$ 20 $\times$ 10 mm, more preferably about 10 $\times$ 10 $\times$ 3 mm.

In another embodiment, it is disclosed a process for the preparation of an asphalt mixture as defined above, which comprises combining the pellet composition of the invention with an aggregate. However, the preparation of the asphalt mixture of the invention can also comprise combining the synthetic binder composition as defined above with an aggregate.

The asphalt mixture composition disclosed herein can be prepared in a hot mix process by heating the aggregate to a temperature of at least 120°C, preferably 140°C and then adding the pellet composition to the aggregate.

Finally, another embodiment of the invention refers to the use of the asphalt mixture as defined above, to form pavement in conventional pavement-laying processes.

## Examples

The invention will be now described by reference to examples which are not intended to limit the invention.

Example 1. Preparation of synthetic binder compositions.

Two synthetic binder compositions, with or without sulfur content, were prepared based on Table 1. The oil (Nynas Nytex 840) was placed in a temperature isolated mixing tank and heated at 160°C. Then, the Fischer-Tropsch wax (Sasobit® wax) was added to the tank and the mixture was agitated until the wax dissolved completely. Then, the resin (BT-120 from CYJSA) was added and the temperature maintained at 160°C until the resin dissolved in the mixture. Finally, the EVA polymer (PA-441 from Repsol) was added progressively over a few minutes. The dissolution of the polymer was assessed visually.

For the case of composition II, a mix of EVA (PA-441 from Repsol) polymer and SBR polymer (C.1205 from Repsol) is added until complete dissolution. Then, when the polymer dispersion was finished, sulfur prills were added.

Table I

| Components | Composition I (wt%) | Composition II (wt%) |
|---|---|---|
| Nynas Nytex 840 oil | 40 | 40 |
| Sasobit® wax | 10 | 10 |
| Resin BT-120 CYJSA | 25 | 24.8 |
| Co-polymers | 25 | 20 and 5 |
| Sulfur prills | 0 | 0.2 |

Example 2. Preparation of pellet compositions.

Calcium carbonate is added at 160°C to the synthetic binder compositions I and II for the pelletization process in a ratio synthetic binder composition to calcium carbonate 9:1. The mixtures were then fed to an extrusion die. The resulting extrudates exited the die at a temperature of 140 to 160°C. The extrudates were pellets in the form of tablets having dimensions of about 9 mm length, 9 mm height and 3 mm width.

Example 3. Agglomeration tests.

Pellets of composition I according to the invention (with a Fischer-Tropsch wax), further treated as discussed in Example 2, and comparative compositions III (no WAX), IV and V (both with paraffin waxes), see Table II, prepared as described in Example 2, were submitted each to an agglomeration test carried out at 60°C during 48 hours in an oven. The pellets are introduced in a container with a fix load in the top of the product equivalent to 10 times weight of the pellet (see Figure 1). This test simulates accelerating the combined effect of the elevated temperature and storage time. After this period of time, the pellets are removed from the oven and agglomeration is evaluated in a qualitative test; if the pellets are free of agglomeration the pellet composition is considered valid, the opposite is considered non valid.

Table II

| Components | Composition I (wt%) | Comparative composition III (wt%) | Comparative composition IV (wt%) | Comparative composition V (wt%) |
|---|---|---|---|---|
| Nynas Nytex 840 oil | 40 | 44.4 | 40 | 40 |

(continued)

| Components | Composition I (wt%) | Comparative composition III (wt%) | Comparative composition IV (wt%) | Comparative composition V (wt%) |
|---|---|---|---|---|
| Sasobit® wax | 10 | 0 | 0 | 0 |
| 5860 Paraffine wax from Repsol | 0 | 0 | 10 | 0 |
| 145 Micro paraffine wax from Repsol | 0 | 0 | 0 | 10 |
| Resin BT-120 CYJSA | 25 | 27.8 | 25 | 25 |
| EVA polymer | 25 | 27.8 | 25 | 25 |
| Talc | 0 | 0 | 0 | 0 |

The above described agglomeration tests show that the binder of the invention provides pellets with reduced stickiness (see Figures 2a and 2b), proving effectiveness of adding a Fischer-Tropsh wax. The pellets of the invention do not stick after the compression step and do not even present the shiny outer look of pellets which exude oily material. The look and stickiness of the pellets of the invention (composition I) is essentially the same as before the experiment (compare Figure 1 and Figures 2a and 2b) . On the contrary, pellets prepared with other waxes (compositions IV and V) stick, the pellets completely losing their integrity and forming a non-workable plaster (Figures 3a, 3b and Figures 4a and 4b, respectively). The same non-workable plaster is obtained with pellets devoid of wax (composition III - Figure 5).

## Claims

**1.** A pellet composition comprising:

- a synthetic binder composition comprising

i) from 10 to 65%wt based upon the total weight of the binder composition of at least one resin,
ii) from 20 to 60wt% based upon the total weight of the binder composition of at least one oil,
iii) from 5 to 35wt% based upon the total weight of the binder composition of at least one polymer, and
iv) from 5 to 20wt% based upon the total weight of the binder composition of at least one Fischer-Tropsch wax with melting point between 80 and 120°C; and

- at least one filler material.

**2.** A pellet composition according to claim 1, wherein the resin is selected from the group of petroleum aromatic resins, petroleum aliphatic resins, rosins, and mixtures thereof.

**3.** A pellet composition according to any of claims 1 and 2, wherein the oil is selected from naphthenic oils, paraffinic oils, aromatic oils, and mixtures thereof.

**4.** A pellet composition according to any of claims 1 to 3, wherein the polymer is a copolymer selected from the group of styrene-butadiene-styrene (SBS), styrene-butadiene (SBR), ethylene vinyl acetate (EVA), ethylene butyl acrylate (EBA), styrene-ethylene-butylene-styrene (SEBS), styrene-isoprene-styrene (SIS), ethylene methacrylate (EMA) and mixtures thereof.

**5.** A pellet composition according to any of claims 1 to 4, further comprising sulfur.

**6.** An asphalt mixture comprising the pellet composition as defined in any of claims 1 to 5 and an aggregate.

**7.** A process for the preparation of a pellet composition as defined in any of claims 1 to 5, comprising mixing the synthetic binder composition and a filler material at a temperature from 120 to 160°C.

**8.** Use of an asphalt mixture as defined in claim 6 to form pavement.

## Patentansprüche

1. Eine Pelletzusammensetzung, umfassend:

   - eine synthetische Binderzusammensetzung, umfassend

     i) 10 bis 65 Gew.-%, bezogen auf das Gesamtgewicht der Binderzusammensetzung, von mindestens einem Harz,
     ii) 20 bis 60 Gew.-%, bezogen auf das Gesamtgewicht der Binderzusammensetzung, von mindestens einem Öl,
     iii) 5 bis 35 Gew.-%, bezogen auf das Gesamtgewicht der Binderzusammensetzung, von mindestens einem Polymer, und
     iv) 5 bis 20 Gew.-%, bezogen auf das Gesamtgewicht der Binderzusammensetzung, von mindestens einem Fischer-Tropsch-Wachs mit einem Schmelzpunkt zwischen 80 und 120 °C;
     und

   - mindestens einen Füllstoff.

2. Eine Pelletzusammensetzung nach Anspruch 1, wobei das Harz ausgewählt ist aus der Gruppe von aromatischen Mineralölharzen, aliphatischen Mineralölharzen, Kolophonium und Mischungen derselben.

3. Eine Pelletzusammensetzung nach einem oder mehreren der Ansprüche 1 und 2, worin das Öl ausgewählt wird aus naphthenischen Ölen, paraffinischen Ölen, aromatischen Ölen und Mischungen derselben.

4. Eine Pelletzusammensetzung nach einem oder mehreren der Ansprüche 1 bis 3, worin das Polymer ein Copolymer ist, ausgewählt aus der Gruppe von Styrol-Butadien-Styrol (SBS), Styrol-Butadien (SBR), Ethylen-Vinylacetat (EVA), Ethylen-Butylacrylat (EBA), Styrol-Ethylen-Butylen-Styrol (SEBS), Styrol-Isopren-Styrol (SIS), Ethylen-Methacrylat (EMA) und Mischungen derselben.

5. Eine Pelletzusammensetzung nach einem oder mehreren der Ansprüche 1 bis 4, weiterhin umfassend Schwefel.

6. Eine Asphaltmischung, umfassend die Pelletzusammensetzung, wie sie definiert ist in einem oder mehreren der Ansprüche 1 bis 5, und einen Zuschlagstoff.

7. Ein Verfahren zur Herstellung einer Pelletzusammensetzung wie sie in einem oder mehreren der Ansprüche 1 bis 5 definiert ist, umfassend Vermischen der synthetischen Binderzusammensetzung und eines Füllstoffes bei einer Temperatur von 120 bis 160 °C.

8. Verwendung einer Asphaltmischung, wie sie in Anspruch 6 definiert ist, zum Bilden von Belag.

## Revendications

1. Une composition sous forme de granulés comprenant :

   - une composition de liant synthétique comprenant

     i) de 10 à 65 % en poids, par rapport au poids total de la composition de liant, d'au moins une résine,
     ii) de 20 à 60 % en poids, par rapport au poids total de la composition de liant, d'au moins une huile,
     iii) de 5 à 35 % en poids, par rapport au poids total de la composition de liant, d'au moins un polymère, et
     iv) de 5 à 20 % en poids, par rapport au poids total de la composition de liant, d'au moins une cire de Fischer-Tropsch ayant un point de fusion compris entre 80 et 120°C ; et

   - au moins un matériau de remplissage.

2. Une composition sous forme de granulés selon la revendication 1, dans laquelle la résine est choisie dans le groupe des résines aromatiques de pétrole, des résines aliphatiques de pétrole, des colophanes et des mélanges de celles-ci.

**3.** Une composition sous forme de granulés selon l'une quelconque des revendications 1 et 2, dans laquelle l'huile est choisie parmi les huiles naphténiques, les huiles paraffiniques, les huiles aromatiques, et les mélanges de celles-ci.

**4.** Une composition sous forme de granulés selon l'une quelconque des revendications 1 à 3, dans laquelle le polymère est un copolymère choisi dans le groupe constitué par le styrène-butadiène-styrène (SBS), le styrène-butadiène (SBR), l'éthylène-acétate de vinyle (EVA), l'éthylène-acrylate de butyle (EBA), le styrène-éthylène-butylène-styrène (SEBS), le styrène-isoprène-styrène (SIS), le méthacrylate d'éthylène (EMA) et les mélanges de ceux-ci.

**5.** Une composition sous forme de granulés selon l'une quelconque des revendications 1 à 4, comprenant en outre du soufre.

**6.** Un mélange d'asphalte comprenant la composition sous forme de granulés telle que définie dans l'une quelconque des revendications 1 à 5 et un agrégat.

**7.** Un procédé pour la préparation d'une composition sous forme de granulés telle que définie dans l'une quelconque des revendications 1 à 5, comprenant le fait de mélanger la composition de liant synthétique et un matériau de charge à une température de 120 à 160°C.

**8.** Utilisation d'un mélange d'asphalte tel que défini dans la revendication 6 pour former une chaussée.

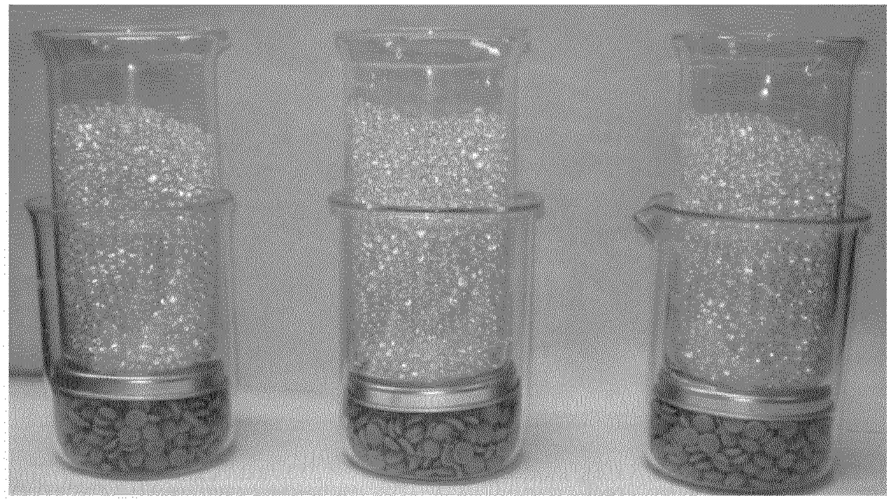

Composition I | Composition IV (comparative) | Composition V (comparative)

Figure 1

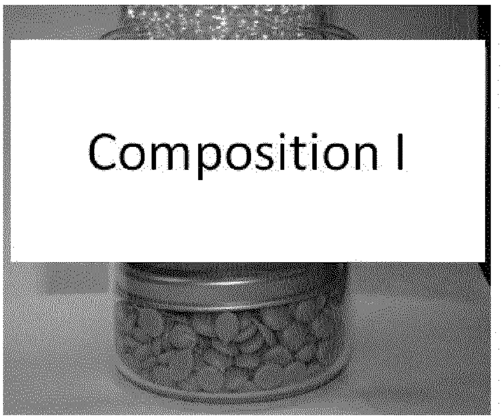


Figure 2a

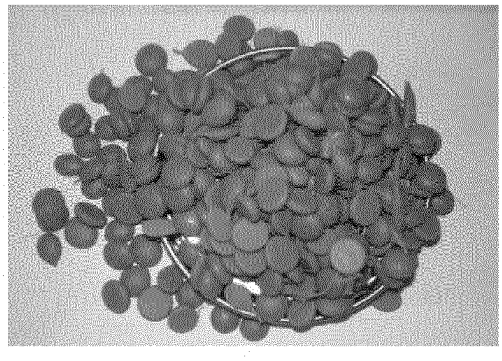

Composition I

Figure 2b

Composition IV (comparative)

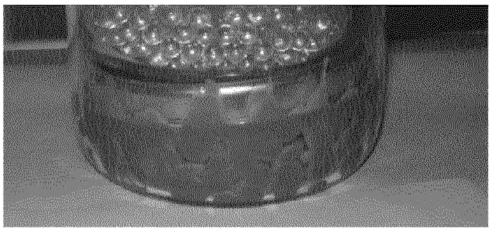

Figure 3a

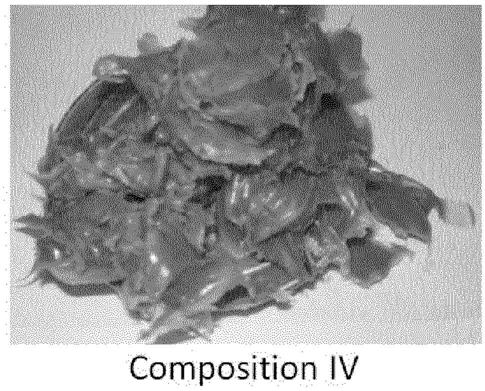

Composition IV (comparative)

Figure 3b

Composition V
(comparative)

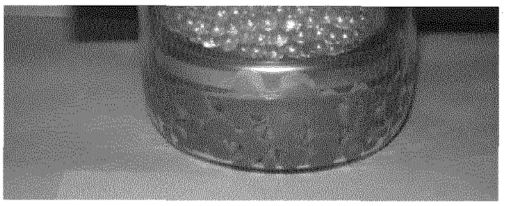

Figure 4a

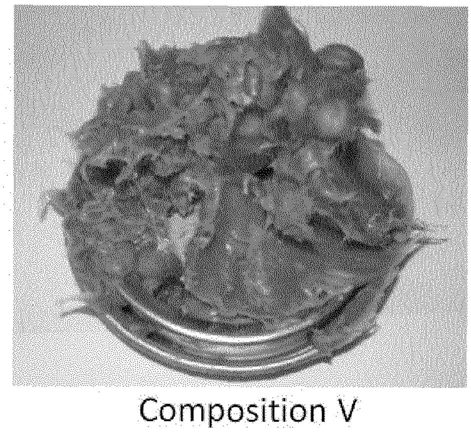

Composition V
(comparative)

Figure 4b

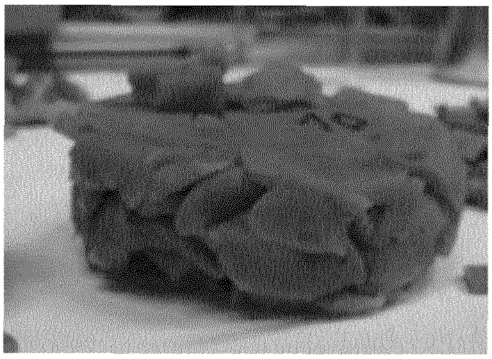

Composition III
(comparative)

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1783174 A
- EP 179510 A
- WO 2009025947 A
- US 20080015288 A
- US 7767259 B
- WO 2009153324 A
- FR 2765229


### Non-patent literature cited in the description


- **VAN DIJK, H.A.J.** The Fischer-Tropsch synthesis: A mechanistic study using transient isotopic tracing. Technische Universiteit Eindhoven, 2001